# EUROPÄISCHE PATENTSCHRIFT

(11) **EP 3 142 068 B1**
(45) Veröffentlichungstag und Bekanntmachung des Hinweises auf die Patenterteilung: **03.01.2018**
(21) Anmeldenummer: 15184182.2
(22) Anmeldetag: 08.09.2015
(51) Int. Cl.: G06T 7/521, G06T 7/593

(54) **VERFAHREN ZUR DREIDIMENSIONALEN ERFASSUNG VON OBJEKTEN**
METHOD FOR THREE-DIMENSIONAL RECORDING OF OBJECTS
PROCEDE DE DETECTION TRIDIMENSIONNELLE D'OBJETS

(43) Veröffentlichungstag der Anmeldung: 15.03.2017
(73) Patentinhaber: SICK AG, 79183 Waldkirch/Breisgau (DE)
(72) Erfinder: HORNUNG, Armin, 79110 Freiburg (DE); NEUBAUER, Matthias, 79102 Freiburg (DE)
(74) Vertreter: Manitz Finsterwald Patentanwälte PartmbB

(56) Entgegenhaltungen:
- US-A1- 2013 100 256
- KANG ZHANG ET AL: "Binary stereo matching", PATTERN RECOGNITION (ICPR), 2012 21ST INTERNATIONAL CONFERENCE ON, IEEE, 11. November 2012 (2012-11-11), Seiten 356-359, XP032329341, ISBN: 978-1-4673-2216-4
- MICHAEL CALONDER ET AL: "BRIEF: Computing a Local Binary Descriptor Very Fast", IEEE TRANSACTIONS ON PATTERN ANALYSIS AND MACHINE INTELLIGENCE, IEEE COMPUTER SOCIETY, USA, Bd. 34, Nr. 7, 1. Juli 2012 (2012-07-01), Seiten 1281-1298, XP011444694, ISSN: 0162-8828, DOI: 10.1109/TPAMI.2011.222
- ETHAN RUBLEE ET AL: "ORB: An efficient alternative to SIFT or SURF", COMPUTER VISION (ICCV), 2011 IEEE INTERNATIONAL CONFERENCE ON, IEEE, 6. November 2011 (2011-11-06), Seiten 2564-2571, XP032101497, DOI: 10.1109/ICCV.2011.6126544 ISBN: 978-1-4577-1101-5
- TRZCINSKI TOMASZ ET AL: "Learning Image Descriptors with Boosting", IEEE TRANSACTIONS ON PATTERN ANALYSIS AND MACHINE INTELLIGENCE, IEEE COMPUTER SOCIETY, USA, Bd. 37, Nr. 3, 1. März 2015 (2015-03-01), Seiten 597-610, XP011572406, ISSN: 0162-8828, DOI: 10.1109/TPAMI.2014.2343961 [gefunden am 2015-02-03]
- YLIOINAS JUHA ET AL: "Learning local image descriptors using binary decision trees", IEEE WINTER CONFERENCE ON APPLICATIONS OF COMPUTER VISION, IEEE, 24 March 2014 (2014-03-24), pages 347-354, XP032609970, DOI: 10.1109/WACV.2014.6836079 [retrieved on 2014-06-16]

## Beschreibung

Die vorliegende Erfindung betrifft ein Verfahren zur dreidimensionalen Erfassung von Objekten, bei welchem eine Szene mittels einer ersten Bilderfassungseinrichtung erfasst wird, wobei ein erstes Bild erzeugt wird. Zudem wird die Szene auch mittels einer zweiten Bilderfassungseinrichtung erfasst, wobei ein zweites Bild erzeugt wird. Anschließend werden ein Korrelationsfenster als Ausschnitt des ersten Bildes und mehrere Suchfenster als Ausschnitte des zweiten Bildes festgelegt, wobei verschiedene Suchfenster verschiedene Bereiche des zweiten Bildes wiedergeben. Darauffolgend wird mittels eines Korrelationsverfahrens das dem Korrelationsfenster entsprechende Suchfenster ermittelt.

Verfahren zur dreidimensionalen Erfassung von Objekten sind grundsätzlich bekannt und werden z.B. bei Anwendungen des maschinellen Sehens eingesetzt, um Objekte, Personen und dergleichen zu erfassen und zu erkennen. Beispielsweise kann mittels solcher Verfahren die Position einer Person im Raum oder sogar die Position einzelner Gliedmaßen (z.B. der Hände) der Person festgestellt werden.

Zu diesem Zweck kann eine Szene mit zwei verschiedenen Bilderfassungseinrichtungen erfasst werden, wobei die Bilderfassungseinrichtungen beabstandet zueinander angeordnet sind. Mittels der Bilderfassungseinrichtungen werden zwei Bilder erzeugt, in welchen beispielsweise ein zu erfassendes Objekt aufgrund des Versatzes der Bilderfassungseinrichtungen an unterschiedlichen Positionen in den Bildern abgebildet ist.

Ein Korrelationsfenster kann als Ausschnitt eines der Bilder festgelegt werden, wobei das Korrelationsfenster bevorzugt das zu erfassende Objekt enthält. Durch die Verwendung von mehreren Suchfenstern in einem Korrelationsverfahren kann nachfolgend dasjenige Suchfenster bestimmt werden, in welchem das zu erfassende Objekt in dem anderen Bild ebenfalls sichtbar ist.

Aufgrund der unterschiedlichen Positionen des zu erfassenden Objekts in dem ersten und dem zweiten Bild kann ein Winkel von der ersten und der zweiten Bilderfassungseinrichtung zu dem Objekt bestimmt werden, woraufhin mittels Triangulation der Abstand des Objekts zu den Bilderfassungseinrichtungen und damit die räumliche Position des Objekts ermittelt werden kann.

Als Korrelationsverfahren kann beispielsweise das sogenannte Census-Verfahren verwendet werden, bei welchem innerhalb des Korrelationsfensters die Helligkeit verschiedener Pixel jeweils mit einem zentralen Pixel verglichen wird. Aus den jeweiligen Vergleichen mit dem zentralen Pixel wird für jeden Vergleich ein Binärwert gebildet, wobei aus sämtlichen Binärwerten ein Census-Vektor gebildet wird, der die relative Helligkeits- bzw. Grauwertverteilung in dem Suchfenster beschreibt. In dem Korrelationsverfahren können dann beispielsweise die erzeugten Census-Vektoren miteinander verglichen werden, um dasselbe Objekt möglichst sicher in dem ersten und dem zweiten Bild aufzufinden.

Alternativ zu dem Census-Verfahren kann auch z.B. das sogenannte BRIEF-Verfahren verwendet werden, welches in "Calonder et. al - BRIEF: Computing a Local Binary Descriptor Very Fast. IEEE Transactions on Pattern Analysis and Machine Intelligence 2012" und "Zhang et. al - Binary stereo matching. ICPR 2012" beschrieben ist.

Um z.B. mittels des Census-Verfahrens eine gute Korrelation zwischen dem Korrelationsfenster (erstes Bild) und dem entsprechenden Suchfenster (zweites Bild) zu schaffen, werden sehr große Korrelationsfenster und sehr lange Census-Vektoren benötigt. Große Korrelationsfenster verschlechtern allerdings die Objektauflösung, wodurch kleine Objekte nicht mehr bzw. nur schlecht erkannt werden können. Zudem müssen bei großen Korrelationsfenstern viele Punktvergleiche durchgeführt werden, wodurch der Rechenaufwand für die Durchführung eines solchen Verfahrens stark steigt. Insbesondere kann aufgrund des großen Rechenaufwandes eine Durchführung des Verfahrens in Echtzeit nicht mehr möglich sein.

In "Rublee et. al - ORB: An efficient alternative to SIFT and SURF, in Computer Vision (ICCV), XP032101497" wird eine Weiterentwicklung des BRIEF-Verfahrens beschrieben, welche ein Binarisierungsschema verwendet, das nach einem fest vorgegebenem Ablauf erzeugt wird.

Die US 2013/0100256 A1 lehrt die Verwendung eines Punktmusters, welches mittels mehrerer Kameras erfasst wird, um eine Tiefenkarte zu erzeugen.

Aus "Ylionas et. al - Learning local image descriptors using binary decision trees, XP032609970" ist die zufällige Wahl eines Binarisierungsschemas bekannt.

Es ist die der Erfindung zugrundeliegende Aufgabe, ein Verfahren zur dreidimensionalen Erfassung von Objekten anzugeben, welches eine zuverlässige Erfassung auch von kleinen Objekten ermöglicht und trotzdem mit einem geringen Rechenaufwand auskommt.

Diese Aufgabe wird durch ein Verfahren gemäß Anspruch 1 gelöst. Nachfolgend werden die Verfahrensschritte genauer erläutert.

Erfindungsgemäß zeichnet sich das Verfahren dadurch aus, dass bei dem Korrelationsverfahren ein Binarisierungsschema auf das Korrelationsfenster und die Suchfenster angewendet wird, bei welchem jeweils die Punkte zumindest eines zufällig ausgewählten Punktpaares innerhalb des Korrelationsfensters und innerhalb der Suchfenster miteinander verglichen werden, wobei für das Korrelationsfenster und die Suchfenster jeweils ein Ergebnisvektor gebildet wird. Zudem zeichnet sich das erfindungsgemäße Verfahren dadurch aus, dass eine Korrelation des Ergebnisvektors des Korrelationsfensters und der Ergebnisvektoren der Suchfenster erfolgt, um das dem Korrelationsfenster entsprechende Suchfenster zu ermitteln. Bei der Korrelation kann z.B. der Ergebnisvektor des Korrelationsfensters mit den Ergebnisvektoren der Suchfenster verglichen werden.

Insofern werden zunächst innerhalb des Korrelationsfensters zufällig ausgewählte Punktpaare miteinander verglichen. So kann beispielsweise bei der Verwendung von Grauwertbildern die Helligkeit der zwei Punkte des Punktpaares verglichen werden, wobei in Abhängigkeit des Helligkeitsunterschieds ein Binärwert erzeugt wird, der in den Ergebnisvektor des Korrelationsfensters eingesetzt wird. Die Länge des Ergebnisvektors kann der Anzahl der Punktpaare bzw. der Anzahl der durchgeführten Punktvergleiche innerhalb des Korrelationsfensters entsprechen. Der Ergebnisvektor besitzt also zumindest die Länge Eins. Mittels derartiger Punktvergleiche kann z.B. eine Helligkeitsverteilung in dem Korrelationsfenster auf den Ergebnisvektor abgebildet werden.

Wie beim Korrelationsfenster in dem ersten Bild werden auch innerhalb der Suchfenster in dem zweiten Bild die erläuterten Punktvergleiche durchgeführt, wobei in jedem Suchfenster dieselben Punktvergleiche durchgeführt werden, wie in dem Korrelationsfenster. Das heißt, es werden jeweils dieselben Relativpositionen in dem Korrelationsfenster und in den Suchfenstern miteinander verglichen. Folglich können die Ergebnisvektoren der Suchfenster und der Ergebnisvektor des Korrelationsfensters die gleiche Länge aufweisen.

Zudem können das Korrelationsfenster und die Suchfenster die gleiche Größe (das heißt die gleiche Fläche) besitzen. Das Korrelationsfenster und die Suchfenster können jeweils rechteckig und/oder deckungsgleich gewählt sein.

Die Erfindung macht sich die Erkenntnis zunutze, dass mittels der zufälligen Verteilung der Punktpaare ein Ergebnisvektor erzeugt werden kann, welcher das jeweilige Korrelationsfenster bzw. das jeweilige Suchfenster detailliert und aussagekräftig beschreibt. Es ist daher möglich, auch kleinere Korrelationsfenster zu verwenden, die den Rechenaufwand zur Durchführung des Verfahrens senken können. So können auch kleine Objekte sicher detektiert werden und in dem ersten und dem zweiten Bild wiedergefunden werden, wodurch die Möglichkeit geschaffen wird, mittels Triangulation eine dreidimensionale Position des Objekts zu ermitteln. Das erfindungsgemäße Verfahren benötigt somit keine aufwändige Hardware, um auch kleine Objekte sicher zu erfassen.

Es können folglich Hardware-Kosten und Rechenzeit gespart werden, da das erfindungsgemäße Verfahren die von einer bestehenden Hardware erzeugten Daten besser ausnutzen kann.

Es kann also aufsetzend auf das beschriebene Korrelationsverfahren ein Tiefenwert bzw. ein Tiefenversatz für den zentralen Punkt des Korrelationsfensters und des dem Korrelationsfenster entsprechenden Suchfensters ermittelt werden, welcher in eine Tiefenkarte eingetragen wird. Der Tiefenwert bzw. die räumliche Position kann dabei, wie bereits beschrieben, mittels Triangulation berechnet werden. Das zumindest eine Punktpaar wird mittels mehrerer Iterationen ausgewählt, wobei für jede Iteration das zumindest eine Punktpaar zufällig neu gewählt wird und dasjenige zumindest eine Punktpaar für das Korrelationsverfahren verwendet wird, welches die beste Zuordnung zwischen dem Korrelationsfenster und dem dem Korrelationsfenster entsprechenden Suchfenster erzielt.

Anders ausgedrückt werden verschiedene Anordnungen von Punktpaaren miteinander verglichen, um dasjenige Punktpaar bzw. diejenigen Punktpaare zu finden, die die beste Korrelation zwischen dem Korrelationsfenster und dem entsprechenden Suchfenster erreichen. Die Durchführung der Iterationen kann dabei bereits im Entwicklungsprozess, das heißt vor der Erfassung der Szene erfolgen. Hierzu können bei einer ersten Iteration beispielsweise 128 zufällig ausgewählte Punktpaare verwendet werden, wobei diese Punktpaare für das Korrelationsfenster und die Suchfenster verwendet werden und beispielsweise ein Grad der Korrelation zwischen dem Korrelationsfenster und dem dem Korrelationsfenster entsprechenden Suchfenster erfasst wird. Bei nachfolgenden Iterationen werden jeweils von neuem z.B. 128 Punktpaare zufällig ausgewählt und von neuem auf dasselbe Korrelationsfenster und dieselben Suchfenster (wie in der ersten Iteration) angewendet. Abschließend können für das Verfahren diejenigen Punktpaare verwendet werden, die den besten Grad der Korrelation zwischen dem Korrelationsfenster und dem dem Korrelationsfenster entsprechenden Suchfenster aufweisen.

Mittels der Iterationen kann die Zuverlässigkeit und Genauigkeit der Erfassung insbesondere von kleinen Objekten deutlich gesteigert werden, da durch die Iterationen eine Optimierung der ausgewählten Punktpaare erfolgt. Alternativ oder zusätzlich kann mit den Punktpaaren jeder Iteration nicht nur ein Korrelationsfenster untersucht werden, sondern es können auch eine Vielzahl von Korrelationsfenstern, bevorzugt alle möglichen Korrelationsfenster (und damit die zugehörigen Suchfenster), untersucht werden, um die Punktpaare zu finden, die die beste Zuordnung zwischen dem Korrelationsfenster und dem zugehörigen Suchfenster erzielen. Aufgrund der so erreichbaren besseren Zuordnung (d.h. Korrelation) zwischen dem Korrelationsfenster und dem dem Korrelationsfenster entsprechenden Suchfenster kann auch eine dichtere Tiefenkarte erzeugt werden, die zudem ein geringeres Rauschen aufweisen kann.

Vorteilhafte Weiterbildungen der Erfindung sind der Beschreibung, den Unteransprüchen sowie den Zeichnungen zu entnehmen.

Gemäß einer ersten vorteilhaften Ausführungsform wird das zumindest eine Punktpaar vor der Erfassung der Szene, insbesondere zufällig, ausgewählt, wobei das Punktpaar für jedes Fenster gleich ist. Anders ausgedrückt kann das Punktpaar schon im Entwicklungsprozess eines Systems zur dreidimensionalen Erfassung von Objekten, welches das erfindungsgemäße Verfahren ausführt, ausgewählt oder festgelegt werden. Das Punktpaar oder die Punktpaare bleibt/bleiben dann für die Lebensdauer des Systems gleich. Dies bedeutet, dass der Aufwand zur Festlegung des Punktpaars in den Entwicklungsprozess des Systems verlegt wird, wodurch z.B. keine Rechenleistung des Systems während der Durchführung des Verfahrens aufgewendet werden muss.

Bevorzugt werden mehrere Punktpaare verwendet, welche uniform innerhalb des Korrelationsfensters verteilt sind. Anders ausgedrückt verteilen sich die Punkte der Punktpaare im Wesentlichen gleichmäßig über die Fläche des Korrelationsfensters und damit auch über die Fläche der Suchfenster. Dies bedeutet, dass die Punktpaare zwar zufällig (das heißt, nicht entsprechend einer vorbestimmten Regel) gewählt werden, jedoch trotzdem die genannte Randbedingung der uniformen Verteilung erfüllen müssen, und somit gleichmäßig innerhalb des Korrelationsfensters verteilt sind.

Gemäß einer weiteren vorteilhaften Ausführungsform werden zumindest 128 Punktpaare ausgewählt. Innerhalb des Korrelationsfensters und der Suchfenster werden also z.B. jeweils dieselben 128 Punktvergleiche durchgeführt. Dementsprechend besitzen die Ergebnisvektoren dann z.B. die Länge 128 Bit.

Gemäß einer alternativen Ausführungsform kann auch eine Obergrenze der Anzahl der Punktpaare definiert sein. So können beispielsweise maximal 64, 128, 256 oder 512 Punktpaare ausgewählt werden. Insbesondere bietet die Auswahl von genau 128 Punktpaaren einen guten Kompromiss zwischen einer aussagekräftigen Beschreibung des Korrelationsfensters bzw. der Suchfenster durch die Ergebnisvektoren und der benötigten Rechenleistung.

Bei der Wahl der Punktpaare kann ein jeweiliger Punkt (d.h. ein Pixel) auch mit mehreren anderen Punkten verglichen werden. Anders ausgedrückt kann ein Punkt auch in einem oder mehreren anderen Punktpaaren enthalten sein. Weiter bevorzugt werden die Iterationen anhand eines ersten Bildes und eines zweiten Bildes mindestens einer bekannten Szene durchgeführt. Unter einer bekannten Szene ist zu verstehen, dass zumindest ein Teil, vorzugsweise alle in der Szene vorhandenen Objekte und damit auch die auf den Bildern abgebildeten Objekte bekannt sind. Dies bedeutet, dass die räumlichen Positionen der Objekte ebenfalls bekannt sind, wodurch das einem jeweiligen Korrelationsfenster entsprechende Suchfenster im Vorhinein auch bekannt ist. Daraus ergibt sich die Möglichkeit, die Richtigkeit der bei den Iterationen erzielten Ergebnisse zu überprüfen. Die Iterationen können also auch als Simulation bezeichnet werden, wobei die Simulation - wie erwähnt - bereits in der Entwicklungsphase erfolgen kann und insbesondere rein in Software durchgeführt werden kann. Die Verwendung einer bekannten Szene ermöglicht es, das Ergebnis der Iterationen nochmals zu verbessern, wodurch eine Zuordnung zwischen Korrelationsfenster und entsprechendem Suchfenster weiter optimiert werden kann, was wiederum in einer verbesserten Tiefenkarte und einem geringeren Rauschen resultiert.

Erfindungsgemäß wird die Szene mit einem Muster beleuchtet, welches zumindest lokal selbstunähnlich ist. Das heißt, die Szene wird mit einem Muster beleuchtet, dessen Musterstrukturen sich frühestens in einem gewissen Abstand oder außerhalb des Suchbereiches wiederholen. Die selbstunähnlichen Musterstrukturen können es vereinfachen, einander entsprechende Bildbereiche in dem ersten und dem zweiten Bild zu identifizieren, wodurch die Korrelation des Korrelationsfensters und des dem Korrelationsfenster entsprechenden Suchfensters erleichtert werden kann.

Bevorzugt erfolgt die Beleuchtung mit infrarotem Licht, insbesondere infrarotem Laserlicht, so dass die Beleuchtung für das menschliche Auge nicht wahrnehmbar ist. Die Beleuchtung kann z.B. nur in dem Zeitraum erfolgen, in dem die Bilderfassungseinrichtungen die Szene erfassen. Insbesondere kann die Szene mit zumindest zwei Beleuchtungseinrichtungen aus zwei verschiedenen Raumrichtungen beleuchtet werden. Auf diese Weise kann der Einfluss von spiegelnden Oberflächen reduziert werden. Außerdem kann das Muster der Beleuchtung räumlich und zeitlich variieren.

Insbesondere bei der Durchführung von Iterationen zur Ermittlung der optimalen Punktpaare können die Punktpaare an die Beleuchtung angepasst werden. Dabei kann die Kombination aus Iterationen und selbstunähnlicher Beleuchtung einen stark synergistischen Effekt hervorrufen, der die Zuverlässigkeit und Genauigkeit (d.h. den Grad) der Korrelation des Korrelationsfensters und des zugehörigen Suchfensters stark steigern kann.

Gemäß einer weiteren vorteilhaften Ausführungsform wird bei den Iterationen auch das Beleuchtungsmuster verändert. Neben der Auswahl der Punktpaare kann somit ein weiterer Parameter verändert werden, welcher eine noch bessere Optimierung ermöglicht. Grundsätzlich kann die Optimierung bei den Iterationen nach der besten Korrelation zwischen dem Korrelationsfenster und dem dem Korrelationsfenster entsprechenden Suchfenster erfolgen. Alternativ können auch diejenigen Punktpaare und/oder dasjenige Muster der Beleuchtung ausgewählt werden, die die dichteste Tiefenkarte erzeugen, also die für die gesamte Szene die meisten gültigen Tiefeninformationen liefern und/oder den geringsten Fehler in den Tiefenkarten erzeugen.

Gemäß einer weiteren vorteilhaften Ausführungsform umfassen das Korrelationsfenster und die Suchfenster die gleiche Fläche, wobei die Fläche kleiner als 0,5 %, bevorzugt kleiner als 0,1 %, besonders bevorzugt kleiner als 0,01 %, der Fläche des ersten und/oder des zweiten Bildes ist. Beispielsweise können die Korrelationsfenster und die Suchfenster eine Größe von 5 x 5 Pixel aufweisen. Bei einer VGA-Auflösung der Bilderfassungseinrichtungen (640 x 480 Pixel) entsprechen 5 x 5 Pixel 0,0081 % der Fläche des jeweiligen Bildes. Alternativ kann die Größe des Korrelationsfensters und der Suchfenster so gewählt werden, dass beispielsweise ein 40 mm großes Objekt in der Szene noch erkannt werden kann.

Das Korrelationsfenster und das Suchfenster können zum Beispiel rechteckig oder quadratisch ausgebildet sein. Bevorzugt sind das Korrelationsfenster und die Suchfenster kreisförmig ausgebildet. Dies bedeutet, dass die Punktpaare in dem Korrelationsfenster und den Suchfenstern nur innerhalb einer kreisförmigen Fläche angeordnet werden. Beispielsweise kann die kreisförmige Fläche einen Radius von 2,3 Pixeln aufweisen. Durch die Verwendung einer kreisförmigen Fläche ergibt sich eine Schärfung der Kanten von kleinen Objekten, was die Fähigkeit des Verfahrens erhöht, insbesondere kleine Objekte gut zu erfassen. Ähnlich wirkt zum Beispiel die Verwendung rechteckiger, insbesondere quadratischer, Korrelations- bzw. Suchfenster, in denen dann nur solche Pixel ausgewählt werden, die innerhalb eines entsprechenden Radius vom jeweiligen Fenstermittelpunkt entfernt sind. Der Kreisradius kann sich dabei aus der Ausdehnung der minimalen Objektauflösung in Pixel ergeben.

Gemäß einer weiteren vorteilhaften Ausführungsform erfolgt die Korrelation des Ergebnisvektors des Korrelationsfensters und der Ergebnisvektoren der Suchfenster anhand der Hamming-Distanz der Ergebnisvektoren. Die Hamming-Distanz kann als Anzahl der unterschiedlichen Stellen in jeweils zwei Ergebnisvektoren definiert werden. Die bei dem Verfahren verwendeten Ergebnisvektoren umfassen lediglich Binärwerte, so dass der Ergebnisvektor des Korrelationsfensters und der Ergebnisvektor eines Suchfensters, welcher sich an drei Positionen von dem Ergebnisvektor des Korrelationsfensters unterscheidet, eine Hamming-Distanz von Drei aufweist. Dasjenige Suchfenster, dessen Ergebnisvektor die geringste Hamming-Distanz zu dem Ergebnisvektor des Korrelationsfensters aufweist, wird als das dem Korrelationsfenster entsprechende Suchfenster angesehen.

Gemäß einer weiteren vorteilhaften Ausführungsform wird ein Aggregat über mehrere Hamming-Distanzen gebildet, zum Beispiel über 3 x 3 Hamming-Distanzen für benachbarte Korrelationsfenster. Zudem erfolgt bevorzugt die Korrelation anhand des Aggregats. Mittels des Aggregats, das heißt der Aufsummierung von z.B. neun Hamming-Distanz-Werten, erfolgt eine Glättung innerhalb des beispielhaft gewählten 3 x 3-Bereichs, wodurch eine zuverlässigere Objekterkennung erreicht werden kann.

Bevorzugt werden das erste und das zweite Bild rektifiziert und/oder mit einem Rauschfilter gefiltert. Beim Rektifizieren werden geometrische Verzerrungen in den Bilddaten eliminiert. Auf diese Weise können die Bilder derart geformt werden, dass nach dem Rektifizieren die Epipolarlinie für jedes Bild entlang der Pixel einer Bild-Zeile verläuft.

Die Zentren der von den Bilderfassungseinrichtungen erfassten Bilder (bzw. der entsprechenden erfassten Bereiche) sowie eine Position, das heißt ein Punkt, die/der durch ein Objekt definiert wird, spannen gemeinsam eine sogenannte Epipolarebene auf. Die Epipolarebene schneidet das erste und das zweite Bild jeweils in einer Geraden, der sogenannte Epipolarlinie.

Der Rauschfilter ist bevorzugt ein Filter, der beispielsweise jeweils 3 x 3 Pixel verarbeitet, und ist beispielsweise als Tiefpass oder Filter, der eine Gaußsche Glättung durchführt, ausgebildet. Dadurch wird die Fähigkeit, insbesondere kleine Objekte zu erkennen, nochmals erhöht. Zusammen mit dem Rektifizieren und/oder dem Filtern können die Bilder zudem in Grauwertbilder gewandelt werden, welche für jeden Pixel einen Helligkeitswert umfassen.

Bevorzugt werden die Suchfenster nur entlang der Epipolarlinie des zweiten Bildes angeordnet. Hierdurch kann der Aufwand zur Berechnung einer Vielzahl von Suchfenstern reduziert werden, da nur Suchfenster entlang der Epipolarlinie des jeweiligen Objekts bzw. entlang der zum Zentrum des jeweiligen Korrelationsfensters gehörigen Epipolarlinie mit dem Korrelationsfenster verglichen werden müssen. Aufgrund der Rektifizierung der Bilder liegen dem Korrelationsfenster entsprechende Suchfenster dann zum Beispiel nur auf der jeweiligen Epipolarlinie.

Das Verfahren kann für sämtliche möglichen Korrelationsfenster in dem ersten Bild wiederholt werden, um für jeden Bildpunkt (das heißt den jeweiligen Zentrumspunkt des Korrelationsfensters) ein entsprechendes Suchfenster zu finden, womit sich mittels Triangulation (nach und nach) für jeden Bildpunkt der Bilder eine Tiefeninformation berechnen lässt, die in eine Tiefenkarte eingetragen werden kann.

Weiterer Gegenstand der Erfindung ist ein System zur dreidimensionalen Erfassung von Objekten mit einer ersten Bilderfassungseinrichtung, einer zweiten Bilderfassungseinrichtung und einer Recheneinheit. Das erfindungsgemäße System zeichnet sich dadurch aus, dass es ausgebildet ist, ein Verfahren der vorstehend erläuterten Art durchzuführen.

Bevorzugt kann das System eine Beleuchtungseinheit umfassen, welche insbesondere zwischen den Bilderfassungseinrichtungen angeordnet ist. Bezüglich der Beleuchtungseinrichtung kann das System symmetrisch aufgebaut sein. Es können auch mehrere Beleuchtungseinrichtungen vorgesehen sein. Bei den Bilderfassungseinrichtungen kann es sich um Digitalkameras handeln, die Grauwertbilder liefern.

Zusätzlich kann das System auch eine dritte Kamera bzw. eine dritte Bilderfassungseinrichtung aufweisen. In diesem Fall wird das Verfahren zunächst mit zwei der Kameras ausgeführt, wobei hier bereits eine Erfassung von Objekten gemäß dem oben beschriebenen Verfahren erfolgt und anhand der erfassten Objekte eine Tiefenkarte erzeugt wird. Anschließend wird das Verfahren mit einer weiteren Kombination der Kameras wiederholt, um gegebenenfalls fehlende Informationen in der Tiefenkarte bzw. fehlende Informationen zu Objekten zu ergänzen. Eine solche dritte Kamera kann Vorteile bieten, sofern in der Szene abgeschattete Bereiche vorhanden sind, die beispielsweise nur von einer Kamera erfasst werden.

Nachfolgend wird die Erfindung rein beispielhaft unter Bezugnahme auf die Zeichnungen beschrieben. Es zeigen:
- Fig. 1: ein erfindungsgemäßes System zur dreidimensionalen Erfassung von Objekten;
- Fig. 2: ein erstes und ein zweites Bild;
- Fig. 3: ein beispielhaftes selbstunähnliches Beleuchtungsmuster;
- Fig. 4: ein rechteckiges Korrelationsfenster; und
- Fig. 5: ein kreisförmiges Korrelationsfenster.

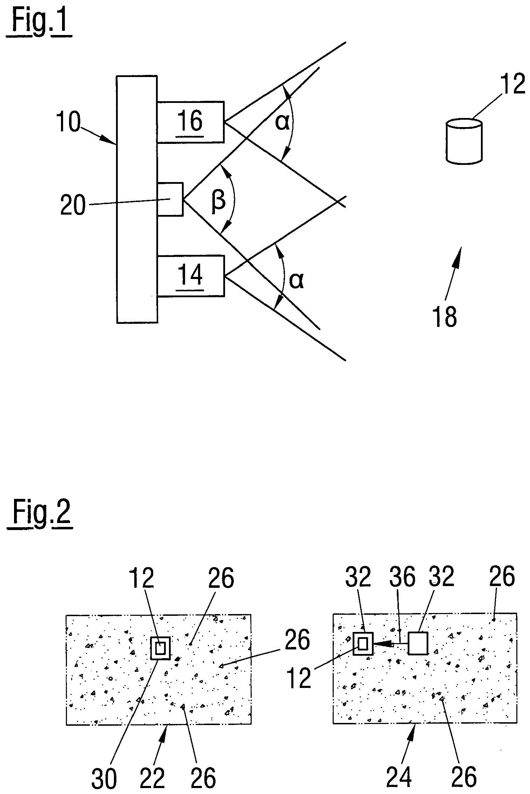

Fig. 1 zeigt ein System 10 zur dreidimensionalen Erfassung eines Objekts 12. Das System 10 weist eine erste Kamera 14 und eine zweite Kamera 16 auf. Die erste Kamera 14 und die zweite Kamera 16 sind auf eine Szene 18 gerichtet, in welcher sich das Objekt 12 befindet. Die Szene 18 wird von der ersten Kamera 14 von einer anderen Position aus erfasst als von der zweiten Kamera 16. Die erste Kamera 14 und die zweite Kamera 16 weisen jeweils einen Betrachtungswinkel α auf, innerhalb dessen die Szene 18 erfasst werden kann.

Zwischen den Kameras 14 ,16 ist eine Beleuchtungseinrichtung 20 angeordnet, die Laserlicht im Infrarotbereich abstrahlt. Die Beleuchtungseinrichtung 20 strahlt das Laserlicht in einen Winkelbereich β ab, der größer als der Winkel α ist. Das System 10 umfasst zudem eine (nicht gezeigte) Recheneinheit, die den nachfolgend erläuterten Betrieb des Systems 10 durchführt und überwacht.

Im Betrieb bestrahlt die Beleuchtungseinrichtung 20 die Szene 18 und damit auch das Objekt 12, während die erste Kamera 14 und die zweite Kamera 16 Bilder der Szene 18 erfassen.

Ein von der ersten Kamera 14 erfasstes erstes Bild 22 sowie ein von der zweiten Kamera 16 erfasstes zweites Bild 24 sind in Fig. 2 gezeigt. In dem ersten Bild 22 ist das Bild des Objekts 12 etwa in der Mitte zu erkennen, wohingegen in dem zweiten Bild 24 das Objekt 12 dementsprechend weiter nach links verschoben ist. Diese Verschiebung in den Bildern 22, 24 ist durch die versetzte Position der ersten Kamera 14 relativ zu der zweiten Kamera 16 verursacht.

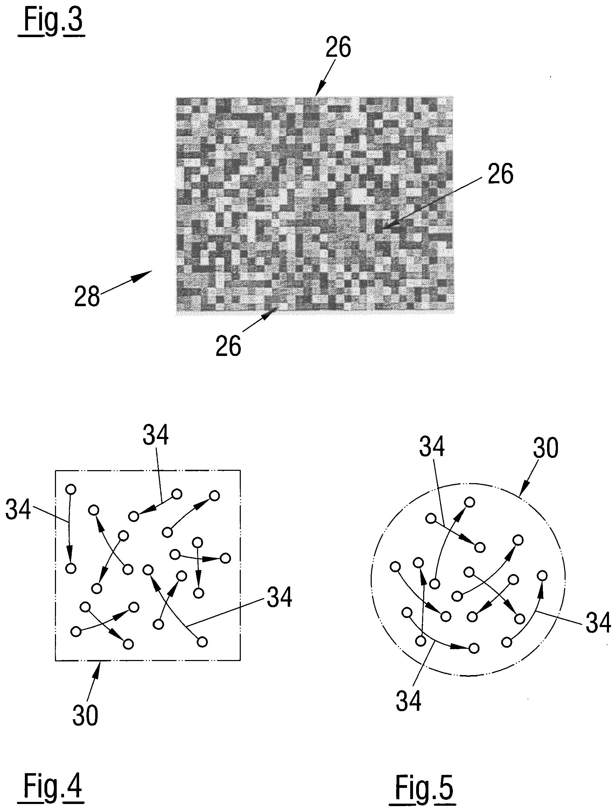

In dem ersten Bild 22 und dem zweiten Bild 24 sind Beleuchtungspunkte 26 zu erkennen, die von der Beleuchtungseinrichtung 20 in die Szene 18 projiziert werden. Die Beleuchtungspunkte 26 bilden ein selbstunähnliches Beleuchtungsmuster 28, welches genauer in Fig. 3 dargestellt ist.

Das in Fig. 3 gezeigte Beleuchtungsmuster 28 zeigt eine zweidimensionale Anordnung von Beleuchtungspunkten 26 mit unterschiedlicher Helligkeit. Das Beleuchtungsmuster 28 weist hier insbesondere keine periodische Struktur und kein Linienmuster auf, sondern ist - wie erwähnt - selbstunähnlich.

Zum leichteren Verständnis wird das Objekt 12 sowohl in der Szene 18 (d.h. dem Gegenstandsraum) als auch in den Bildern 22, 24 mit dem Bezugszeichen 12 bezeichnet. Dabei bezieht sich das Bezugszeichen 12 in den Bildern 22, 24 auf die dortige jeweilige Abbildung des Objekts 12 (also auf den Bildraum des ersten Bildes 22 oder den Bildraum des zweiten Bildes 24).

In Fig. 2 ist um das Objekt 12 in dem ersten Bild 22 ein rechteckiges Korrelationsfenster 30 gelegt. In dem zweiten Bild 24 ist an der dem Korrelationsfenster 30 entsprechenden Stelle ein Suchfenster 32 eingezeichnet. Ein weiteres Suchfenster 32 ist um die tatsächliche Position des Objekts 12 in dem zweiten Bild 24 eingezeichnet. Das Korrelationsfenster 30 und die Suchfenster 32 sind grundsätzlich identisch aufgebaut und genauer in den Fig. 4 und 5 gezeigt. Im Folgenden soll jeweils nur von einem Korrelationsfenster 30 gesprochen werden, die Ausführungen gelten aber entsprechend für die Suchfenster 32.

Fig. 4 zeigt ein rechteckiges Korrelationsfenster 30, innerhalb welchem eine Vielzahl von Punktpaaren 34 eingezeichnet ist. Die Anordnung der Punktpaare 34 wurde während der Entwicklung des Systems 10 durch eine Vielzahl von Iterationen (nach dem Trial-and-Error-Prinzip) an das Beleuchtungsmuster 28 angepasst, so dass auch besonders kleine Objekte 12 gut erkannt werden können. Innerhalb des Korrelationsfensters 30 wird ein Binarisierungsschema angewendet, welches durch die Punktpaare 34 definiert wird.

Jedes Punktpaar 34 weist zur Definition des Binarisierungsschemas eine durch einen Pfeil gekennzeichnete "Richtung" auf, wobei durch die Richtung die Reihenfolge eines Vergleichs des Punktpaars festgelegt wird. Ist beispielsweise der Punkt bzw. Pixel im Ursprung des Pfeils heller als der Punkt am Ende des Pfeils, so wird für den Vergleich dieses Punktpaares 34 als Ergebnis eine Eins erzeugt. Ansonsten ist das Ergebnis des Vergleichs eine Null.

Das Ergebnis des Binarisierungsschemas ist jeweils ein Ergebnisvektor für das Korrelationsfenster 30 und die Suchfenster 32, welcher für jeden Paarvergleich jedes Punktpaars 34 entweder eine Null oder eine Eins enthält, wobei der im Ergebnisvektor enthaltene Wert das Ergebnis des Vergleichs des jeweiligen Punkpaares 34 ist.

Ein solches Binarisierungsschema kann entweder auf ein rechteckiges Korrelationsfenster 30, wie in Fig. 4 gezeigt, oder auf ein kreisförmiges Korrelationsfenster 30, wie in Fig. 5 gezeigt, angewendet werden. Es können auch rechteckige oder quadratische Korrelationsfenster und Suchfenster zum Einsatz kommen, in denen aber nur solche Pixel ausgewertet werden, die innerhalb eines Kreisradius vom jeweiligen Fenstermittelpunkt entfernt sind. Der Kreisradius kann sich dabei aus der minimalen Objektauflösung in Pixel ergeben.

Um beispielsweise bei den in Fig. 2 gezeigten Bildern 22, 24 ein Suchfenster 32 zu ermitteln, in welchem ebenfalls das Objekt 12 vorhanden ist, wird mittels der Punktpaare 34 das Binarisierungsschema auf das Korrelationsfenster 30 angewandt und so ein Ergebnisvektor für das Korrelationsfenster berechnet. Anschließend wird für verschiedene Suchfenster 32, die entlang einer Epipolarlinie 36 (die in Fig. 2 nur als Pfeil angedeutet ist) jedes mögliche Suchfenster 32 ausgewertet, das heißt, es wird dasselbe Binarisierungsschema wie für das Korrelationsfenster 30 auf jedes Suchfenster 32 angewandt. Dementsprechend wird für jedes Suchfenster 32 ein eigener Ergebnisvektor berechnet.

Dasjenige Suchfenster 32, dessen Ergebnisvektor die geringste Hamming-Distanz zu dem Ergebnisvektor des Korrelationsfensters 30 besitzt, wird als das dem Korrelationsfenster entsprechende Suchfenster angesehen, wobei dann mit großer Wahrscheinlichkeit davon ausgegangen werden kann, dass innerhalb dieses Suchfensters 32 ebenfalls das Objekt 12 zu sehen ist. Das dem Korrelationsfenster 30 entsprechende Suchfenster 32 ist demnach das linke in Fig. 2 gezeigte Suchfenster 32, welches das Objekt 12 enthält.

Da nun die Position des Objekts 12 sowohl in dem ersten Bild 22 als auch in dem zweiten Bild 24 bekannt ist, kann mittels eines Triangulationsverfahrens der Abstand des Objekts 12 von dem System 10 in der Szene 18 ermittelt werden und in eine Tiefenkarte eingetragen werden. Für weitere Objekte (nicht gezeigt) kann das Verfahren entsprechend wiederholt werden.

### Bezugszeichenliste

- 10: System
- 12: Objekt, Abbild des Objekts
- 14: erste Kamera
- 16: zweite Kamera
- 18: Szene
- 20: Beleuchtungseinrichtung
- 22: erstes Bild
- 24: zweites Bild
- 26: Beleuchtungspunkt
- 28: Beleuchtungsmuster
- 30: Korrelationsfenster
- 32: Suchfenster
- 34: Punktpaar
- 36: Epipolarlinie

- α: Betrachtungswinkel
- β: Winkelbereich

## Patentansprüche

1. Verfahren zur dreidimensionalen Erfassung von Objekten (12), bei welchem
- eine Szene (18) mittels einer ersten Bilderfassungseinrichtung (14) erfasst wird, wobei ein erstes Bild (22) erzeugt wird,
- die Szene (18) auch mittels einer zweiten Bilderfassungseinrichtung (16) erfasst wird, wobei ein zweites Bild (24) erzeugt wird,
- ein Korrelationsfenster (30) als Ausschnitt des ersten Bildes (22) festgelegt wird,
- mehrere Suchfenster (32) als Ausschnitte des zweiten Bildes (24) festgelegt werden, wobei verschiedene Suchfenster (32) verschiedene Bereiche des zweiten Bildes (24) wiedergeben,
- mittels eines Korrelationsverfahrens das dem Korrelationsfenster (30) entsprechende Suchfenster (32) ermittelt wird,
wobei
- bei dem Korrelationsverfahren ein Binarisierungsschema auf das Korrelationsfenster (30) und die Suchfenster (32) angewendet wird, bei welchem jeweils die Punkte zumindest eines zufällig ausgewählten Punktpaares (34) innerhalb des Korrelationsfensters (30) und innerhalb der Suchfenster (32) miteinander verglichen werden, wobei für das Korrelationsfenster (30) und die Suchfenster (32) jeweils ein Ergebnisvektor gebildet wird,
- eine Korrelation des Ergebnisvektors des Korrelationsfensters (30) und der Ergebnisvektoren der Suchfenster (32) erfolgt, um das dem Korrelationsfenster (30) entsprechende Suchfenster (32) zu ermitteln,
**dadurch gekennzeichnet, dass**
- das zumindest eine Punktpaar (34) mittels mehrerer Iterationen ausgewählt wird, wobei für jede Iteration das zumindest eine Punktpaar (34) zufällig neu gewählt wird und dasjenige zumindest eine Punktpaar (34) für das Korrelationsverfahren verwendet wird, welches die beste Zuordnung zwischen dem Korrelationsfenster (30) und dem dem Korrelationsfenster (30) entsprechenden Suchfenstern (32) erzielt, und
die Szene (18) mit einem Muster (28) beleuchtet wird, welches zumindest lokal selbstunähnlich ist.

2. Verfahren nach Anspruch 1,
**dadurch gekennzeichnet, dass**
das zumindest eine Punktpaar (34) vor der Erfassung der Szene (18) ausgewählt wird, wobei das Punktpaar (34) für jedes Fenster (30, 32) gleich ist.

3. Verfahren nach Anspruch 1 oder 2,
**dadurch gekennzeichnet, dass**
mehrere Punktpaare (34) verwendet werden, welche uniform innerhalb des Korrelationsfensters (30) verteilt sind.

4. Verfahren nach zumindest einem der vorstehenden Ansprüche,
**dadurch gekennzeichnet, dass**
zumindest 128 Punktpaare (34) ausgewählt werden.

5. Verfahren nach zumindest einem der vorstehenden Ansprüche,
**dadurch gekennzeichnet, dass**
die Iterationen anhand eines ersten Bildes (22) und eines zweiten Bildes (24) mindestens einer bekannten Szene (18) durchgeführt werden.

6. Verfahren nach zumindest einem der vorstehenden Ansprüche,
**dadurch gekennzeichnet, dass**
bei den Iterationen auch das Beleuchtungsmuster (28) verändert wird.

7. Verfahren nach zumindest einem der vorstehenden Ansprüche,
**dadurch gekennzeichnet, dass**
das Korrelationsfenster (30) und die Suchfenster (32) die gleiche Fläche umfassen, wobei die Fläche kleiner als 0,5 %, bevorzugt kleiner als 0,1 %, besonders bevorzugt kleiner als 0,01 %, der Fläche des ersten und/oder zweiten Bildes (22, 24) ist.

8. Verfahren nach zumindest einem der vorstehenden Ansprüche,
**dadurch gekennzeichnet, dass**
das Korrelationsfenster (30) und die Suchfenster (32) kreisförmig ausgebildet sind.

9. Verfahren nach zumindest einem der vorstehenden Ansprüche,
**dadurch gekennzeichnet, dass**
die Korrelation des Ergebnisvektors des Korrelationsfensters (30) und der Ergebnisvektoren der Suchfenster (32) anhand der Hamming-Distanz der Ergebnisvektoren erfolgt.

10. Verfahren nach Anspruch 9,
**dadurch gekennzeichnet, dass**
ein Aggregat über mehrere Hamming-Distanzen, insbesondere über 3x3 Hamming-Distanzen, gebildet wird und anhand des Aggregats die Korrelation erfolgt.

11. Verfahren nach zumindest einem der vorstehenden Ansprüche,
**dadurch gekennzeichnet, dass**
das erste und das zweite Bild (22, 24) rektifiziert werden und/oder mit einem Rauschfilter gefiltert werden.

12. Verfahren nach zumindest einem der vorstehenden Ansprüche,
**dadurch gekennzeichnet, dass**
die Suchfenster (32) nur entlang der Epipolarlinie (36) des zweiten Bildes (24) angeordnet werden.

13. System (10) zur dreidimensionalen Erfassung von Objekten (12) mit einer ersten Bilderfassungseinrichtung (14), einer zweiten Bilderfassungseinrichtung (16) und einer Recheneinheit, wobei das System (10) ausgebildet ist, ein Verfahren gemäß zumindest einem der vorstehenden Ansprüche durchzuführen.

## Claims

1. A method for the three-dimensional detection of objects (12) in which
- a scene (18) is detected by means of a first image detection device (14), wherein a first image (22) is produced;
- the scene (18) is also detected by means of a second image detection device (16), wherein a second image (24) is produced;
- a correlation window (30) is fixed as a portion of the first image (22);
- a plurality of search windows (32) are fixed as portions of the second image (24), wherein different search windows (32) reproduce different regions of the second image (24);
- the search window (32) corresponding to the correlation window (30) is determined by means of a correlation process,
wherein,
- in the correlation process, a binarization scheme is applied to the correlation window (30) and to the search windows (32) in which the respective points of at least one randomly selected point pair (34) within the correlation window (30) and within the search windows (32) are compared with one another, with a respective results vector being formed for the correlation window (30) and for the search windows (32); and
- a correlation of the results vector of the correlation window (30) and of the results vectors of the search windows (32) takes place to determine the search window (32) corresponding to the correlation window (30), **characterized in that**
- the at least one point pair (34) is selected by means of a plurality of iterations, wherein the at least one point pair (34) is reselected randomly for each iteration and that at least one point pair (34) is used for the correlation process which achieves the best association between the correlation window (30) and the search window (32) corresponding to the correlation window (30); and
- **in that** the scene (18) is illuminated with a pattern (28) which is non-self similar at least locally.

2. A method in accordance with claim 1,
**characterized in that**
the at least one point pair (34) is selected before the detection of the scene (18), with the point pair (34) being the same for each window (30, 32).

3. A method in accordance with claim 1 or claim 2,
**characterized in that**
a plurality of point pairs (34) are used which are uniformly distributed within the correlation window (30).

4. A method in accordance with at least one of the preceding claims,
**characterized in that**
at least 128 point pairs (34) are selected.

5. A method in accordance with at least one of the preceding claims,
**characterized in that**
the iterations are carried out on the basis of a first image (22) and of a second image (24) of at least one known scene (18).

6. A method in accordance with at least one of the preceding claims,
**characterized in that**
the illumination pattern (28) is also varied in the iterations.

7. A method in accordance with at least one of the preceding claims,
**characterized in that**
the correlation window (30) and the search windows (32) comprise the same area, with the area being smaller than 0.5%, preferably smaller than 0.1 %, particularly preferably smaller than 0.01 %, of the area of the first and/or second images (22, 24).

8. A method in accordance with at least one of the preceding claims,
**characterized in that**
the correlation window (30) and the search windows (32) are circular.

9. A method in accordance with at least one of the preceding claims,
**characterized in that**
the correlation of the results vector of the correlation window (30) and of the results vectors of the search windows (32) takes place with reference to the Hamming distance of the results vectors.

10. A method in accordance with claim 9,
**characterized in that**
an aggregate is formed over a plurality of Hamming distances, in particular over 3 x 3 Hamming distances, and the correlation takes place using the aggregate.

11. A method in accordance with at least one of the preceding claims,
**characterized in that**
the first and second images (22, 24) are rectified and/or are filtered by a noise filter.

12. A method in accordance with at least one of the preceding claims,
**characterized in that**
the search windows (32) are only arranged along the epipolar line (36) of the second image (24).

13. A system (10) for the three-dimensional detection of objects (12) comprising a first image detection device (14), a second image detection device (16) and a computing unit,
wherein the system (10) is configured to carry out a method in accordance with at least one of the preceding claims.

## Revendications

1. Procédé de détection tridimensionnelle d'objets (12), dans lequel
- on saisit une scène (18) au moyen d'un premier dispositif de saisie d'image (14), en générant une première image (22),
- on saisit la scène (18) également au moyen d'un second dispositif de saisie d'image (16), en générant une seconde image (24),
- on définit une fenêtre de corrélation (30) en tant qu'extrait de la première image (22),
- on définit plusieurs fenêtres de recherche (32) en tant qu'extraits de la seconde image (24), différentes fenêtres de recherche (32) reproduisant différentes zones de la seconde image (24),
- au moyen d'un procédé de corrélation, on détermine la fenêtre de recherche (32) qui correspond à la fenêtre de corrélation (30),
dans lequel
- lors du procédé de corrélation, on applique un schéma de binarisation sur la fenêtre de corrélation (30) et sur les fenêtres de recherche (32), dans lequel on compare les points respectifs d'au moins une paire de points (34) sélectionnée de façon aléatoire à l'intérieur de la fenêtre de corrélation (30) et à l'intérieur des fenêtres de recherche (32), et on forme un vecteur de résultat respectif pour la fenêtre de corrélation (30) et pour les fenêtres de recherche (32),
- il se produit une corrélation du vecteur de résultat de la fenêtre de corrélation (30) et des vecteurs de résultat de la fenêtre de recherche (32) afin de déterminer la fenêtre de recherche (32) qui correspond à la fenêtre de corrélation (30),
**caractérisé en ce que**
- on sélectionne ladite au moins une paire de points (34) au moyen de plusieurs itérations, et on ré-sélectionne au moins une paire de points (34) de façon aléatoire pour chaque itération, et on utilise cette au moins une paire de points (34) pour le procédé de corrélation, qui obtient la meilleure association entre la fenêtre de corrélation (30) et les fenêtres de recherche (32) qui correspondent à la fenêtre de corrélation (30), et
on illumine la scène (18) avec un motif (28) qui est au moins localement auto-dissemblable.

2. Procédé selon la revendication 1,
**caractérisé en ce que**
avant de saisir la scène (18), on sélectionne ladite au moins une paire de points (34), la paire de points (34) étant identique pour chaque fenêtre (30, 32).

3. Procédé selon la revendication 1 ou 2,
**caractérisé en ce que**
on utilise plusieurs paires de points (34) qui sont réparties uniformément à l'intérieur de la fenêtre de corrélation (30).

4. Procédé selon l'une au moins des revendications précédentes,
**caractérisé en ce que**
on sélectionne au moins 128 paires de points (34).

5. Procédé selon l'une au moins des revendications précédentes,
**caractérisé en ce que**
on exécute les itérations en se basant sur une première image (22) et sur une seconde image (24) d'au moins une scène connue (18).

6. Procédé selon l'une au moins des revendications précédentes,
**caractérisé en ce que**
lors des itérations, on modifie également le motif d'illumination (28).

7. Procédé selon l'une au moins des revendications précédentes,
**caractérisé en ce que**
la fenêtre de corrélation (30) et les fenêtres de recherche (32) ont la même surface, la surface étant inférieure à 0,5 %, de préférence inférieure à 0,1 %, de manière particulièrement préférée inférieure à 0,01 % de la surface de la première et/ou de la seconde image (22, 24).

8. Procédé selon l'une au moins des revendications précédentes,
**caractérisé en ce que**
la fenêtre de corrélation (30) et les fenêtres de recherche (32) sont réalisées circulaires.

9. Procédé selon l'une au moins des revendications précédentes,
**caractérisé en ce que**
la corrélation du vecteur de résultat de la fenêtre de corrélation (30) et les vecteurs de résultat des fenêtres de recherche (32) s'effectue en se basant sur la distance Hamming des vecteurs de résultat.

10. Procédé selon la revendication 9,
**caractérisé en ce que**
on forme un agrégat de plusieurs distances Hamming, en particulier de 3 x 3 distances Hamming, et la corrélation s'effectue en se basant sur l'agrégat.

11. Procédé selon l'une au moins des revendications précédentes,
**caractérisé en ce que**
on rectifie la première et la seconde image (22, 24) et/ou on les filtre par un filtre de bruit.

12. Procédé selon l'une au moins des revendications précédentes,
**caractérisé en ce que**
on dispose les fenêtres de recherche (32) uniquement de long de la ligne épipolaire (36) de la seconde image (24).

13. Système (10) pour la détection tridimensionnelle d'objets (12), comportant un premier dispositif de saisie d'image (14), un second dispositif de saisie d'image (16) et une unité de calcul,
dans lequel
le système (10) est réalisé pour mettre en oeuvre un procédé selon l'une au moins des revendications précédentes.
